# FASCICULE DE BREVET EUROPEEN

(11) **EP 1 235 753 B1**
(45) Date de publication et mention de la délivrance du brevet: **19.05.2004**
(21) Numéro de dépôt: 00968009.1
(22) Date de dépôt: 11.10.2000
(51) Int. Cl.: C02F 1/52, B01D 21/00, B01D 21/08, B01D 21/24, B01D 21/32

(54) **PROCEDE ET INSTALLATION DE CLARIFICATION DES LIQUIDES ET SUSPENSIONS PAR FLOCULATION LESTEE ET DECANTATION**
VERFAHREN UND VORRICHTUNG FÜR DIE KLÄRUNG VON FLÜSSIGKEITEN UND SUSPENSIONEN DURCH BALLASTFLOCKUNG UND SEDIMENTIERUNG
METHOD AND INSTALLATION FOR CLARIFYING LIQUIDS AND SUSPENSIONS BY SAND BALLAST FLOCCULATION AND DECANTATION

(30) Priorité: 03.12.1999 FR 9915301
(43) Date de publication de la demande: 04.09.2002
(73) Titulaire: ONDEO DEGREMONT, 92500 Rueil-Malmaison (FR)
(72) Inventeur: VION, Patrick, F-78800 Houilles (FR)
(74) Mandataire: Peaucelle, Chantal
(86) Numéro de dépôt international: PCT/FR2000/002829
(87) Numéro de publication internationale: WO 2001/040121

(56) Documents cités:
- EP-A- 0 680 933
- EP-A- 0 767 143
- FR-A- 2 758 812
- US-A- 4 927 543

## Description

La présente invention concerne un procédé et une installation de clarification des liquides et suspensions par floculation et décantation.

On connaît un procédé de traitement de clarification des eaux, urbaines ou industrielles, potables, de procédés ou résiduaires, qui met en oeuvre une technique de floculation lestée qui consiste à injecter dans l'eau à traiter une masse de contact (constituée d'un matériau granulaire, tel que notamment du sable) et un polymère, puis à effectuer une étape de floculation qui est accélérée par cette masse de contact et ce polymère, suivie d'une étape de décantation. Le sable, après séparation de la boue et nettoyage, est recirculé dans l'étape de floculation. Un exemple de mise en oeuvre d'un tel procédé est décrit notamment dans FR-A- 1 411 792 ainsi que dans FR-A-2 758 812.

Ce procédé connu présente effectivement l'avantage d'accélérer la floculation, ce qui permet une réduction relativement importante du temps de séjour de l'eau à traiter, dans la phase floculation, de l'ordre de 2 à 8 minutes. Par ailleurs, ce procédé permet d'obtenir des vitesses de décantation très importantes (supérieures à 15 m/h), ces vitesses pouvant atteindre et même dépasser 100 mètres/heure lorsqu'on met en oeuvre une décantation accélérée avec des modules lamellaires. De plus, le démarrage des installations s'effectue rapidement (en environ dix minutes) du fait de la disponibilité immédiate du matériau granulaire dans l'appareil de décantation.

Cependant, l'expérience montre que ce procédé présente un certain nombre d'inconvénients que l'on a résumés ci-après :

### 1°) Forte consommation électrique

La séparation sable/boues qui s'effectue à l'aide d'un hydrocyclone consomme beaucoup d'énergie. En outre, le fonctionnement de l'hydrocyclone ne peut être ajusté en fonction du débit ou de la qualité de l'eau brute. En effet, l'hydrocyclone ne peut pas être arrêté, car sa mise hors service annihilerait la floculation et la décantation ; de plus, les systèmes de nettoyage du matériau granulaire du type hydrocyclone, doivent, afin d'assurer une floculation stable et du fait même de leur principe, être utilisés à débit fixe,: ils sont donc dimensionnés sur le débit et la charge en matériau maximaux de la station de décantation. Il en résulte que la consommation électrique, par m³ de liquide traité, est évidemment plus importante pour les faibles débits ou les eaux peu chargées.

### 2°) Gestion des arrêts de l'installation

Par ailleurs, les systèmes décrits à ce jour, impliquent que lors des périodes d'arrêt, le matériau granulaire ne séjourne pas au fond du décanteur, mais soit transféré dans le floculateur : le risque est en effet élevé, lors du redémarrage de l'installation, de bloquer le racleur de ce décanteur (si le matériau granulaire reste sur le radier) ou l'hydrocyclone (le bouchage de l'hydrocyclone et/ou la perte de sable à la surverse sont inévitables lorsque la concentration du matériau granulaire dans la trémie d'extraction est élevée). Il est alors nécessaire de transférer le sable soit dans le floculateur dont il faut surdimensionner l'hélice pour assurer la remise en suspension du sable, soit dans un bac spécifique comportant des moyens d'agitation à forte énergie. Par ailleurs, ce transfert n'est pas toujours possible, comme dans le cas d'une panne de la pompe alimentant le cyclone (panne électrique ou mécanique).

### 3) Bouchage des tuyauteries

Dans les systèmes décrits à ce jour,( notamment FR-A- 2 719 234), il est également nécessaire, afin d'éviter autant que faire se peut les bouchages du circuit d'extraction, de positionner la ou les pompes d'extraction de floc lesté le plus près possible de la zone centrale d'extraction du décanteur. Ceci implique la construction d'une galerie technique, sous le radier dudit décanteur, et l'installation de longues tuyauteries horizontales et verticales, toujours sensibles au bouchage. Ces impératifs augmentent notablement les coûts de construction et d'exploitation des installations conventionnelles.

### 4) Faible concentration des boues

Le principe même de l'hydrocyclone entraîne une perte en eau élevée (pouvant représenter de 3 à 20% du débit réellement traité sur l'installation) et, en corollaire, la production de boues diluées au niveau de la surverse dudit hydrocyclone ; les boues sont d'autant plus diluées que le débit traité, ou la charge de l'eau brute, est faible. La concentration obtenue est de l'ordre de 0,1 à 2 grammes par litre, dans le cas de la clarification d'eaux de surface.

Compte-tenu des inconvénients de cette technique antérieure, la présente invention s'est fixé pour objectif de résoudre notamment les problèmes suivants :
- Diminuer la consommation d'énergie, en particulier à faible débit ou dans le cas de basse teneur en matières en suspension du liquide influent.
- Gérer les périodes d'arrêt et de remise en service du décanteur et éliminer les risques de bouchage
- Limiter les pertes en eau par rapport au débit total traité par l'installation et obtenir des boues présentant une concentration élevée, (par exemple, supérieure à 2 grammes par litre dans le cas de la clarification d'eaux de surface).
- Réduire les coûts d'installation et d'exploitation en supprimant les pompes (et donc les galeries techniques), situées sous le radier des décanteurs et simplifier l'exploitation des installations mettant en oeuvre la technique de floculation lestée.

Dans la description qui suit, on a adopté la terminologie suivante :
" lest " : le matériau granulaire (par exemple, le sable), neuf ou recyclé après nettoyage du floc-lesté ; lors de la première mise en route de l'installation, la totalité du lest est introduite dans l'équipement "floculateur - décanteur " et, par la suite, l'injection de lest neuf ne sera qu'exceptionnelle, par exemple, pour compenser des pertes éventuelles ou accidentelles)
" floc-lesté " : l'agglomérat constitué du lest, du polymère et des particules qui doivent être éliminées du liquide en cours de clarification
" boues " : le résidu, obtenu après nettoyage du floc-lesté (et après récupération du lest propre), par exemple, à la surverse de l'hydrocyclone
" taux de lest " : la proportion, exprimée en pourcentage, lest propre / (total lest + boues), mesurée dans le floculateur ; une valeur de 90% correspondant à un lest "sale", chargé de boues , à raison de 10% de son poids, alors qu'un taux de lest de 99% (et plus) correspond à un lest propre.

En conséquence, cette invention a pour objet un procédé de traitement de clarification des liquides et suspensions, en particulier des eaux urbaines ou industrielles, potables, de procédés ou résiduaires, mettant en oeuvre la technique de floculation lestée avec une étape d'injection dans le liquide à clarifier, prétraité ou non, d'une masse de contact ou lest, constituée d'un matériau granulaire, tel que notamment du sable, et d'un polymère, suivie d'une étape de floculation, qui amène la formation du floc-lesté, et se termine par une étape de décantation accélérée, le floc-lesté étant recirculé dans l'étape de floculation, soit tel quel, soit après nettoyage, ce procédé, étant caractérisé en ce qu'il comporte deux régimes de recirculation :
- un régime à forte énergie, assurant l'extraction du lest contenu dans le floc-lesté (et donc, par exemple, la séparation du sable d'avec les boues), l'élimination du floc sous forme de boues et le recyclage du lest nettoyé vers la floculation et,
- un régime à faible énergie assurant le transfert du floc-lesté vers la floculation tant que le taux de lest dans le floculateur est supérieur à un niveau prédéterminé, ce régime à faible énergie restant en service lors de la mise en action du régime à forte énergie mais étant arrêté ensuite pendant le fonctionnement dudit régime à forte énergie, les deux systèmes étant mis en oeuvre de façon alternée de manière à maintenir le taux de lest à un niveau prédéterminé.

Selon la présente invention, le régime à faible énergie est systématiquement utilisé pour tout démarrage ou redémarrage de l'installation, afin de remettre en circulation le lest ou le floc-lesté.

Selon la présente invention, on peut prévoir en outre une étape de mesure en continu du taux de lest.

La présente invention vise également une installation pour la mise en oeuvre du procédé spécifié ci-dessus.

D'autres caractéristiques et avantages de la présente invention ressortiront de la description faite ci-après, en référence aux dessins annexés qui en illustrent divers exemples de réalisation dépourvus de tout caractère limitatif.

Sur les dessins :
- La figure 1 est une vue schématique en plan d'un premier exemple de réalisation de l'invention ;
- La figure 2 est une vue en coupe selon A-A de la figure 1 ;
- La figure 3 est une coupe selon B-B de la figure 1 ;
- La figure 4 est une coupe similaire à la figure 2 illustrant une variante de la présente invention et,
- La figure 5 est également une coupe similaire à la figure 2 illustrant une autre variante de la présente invention.

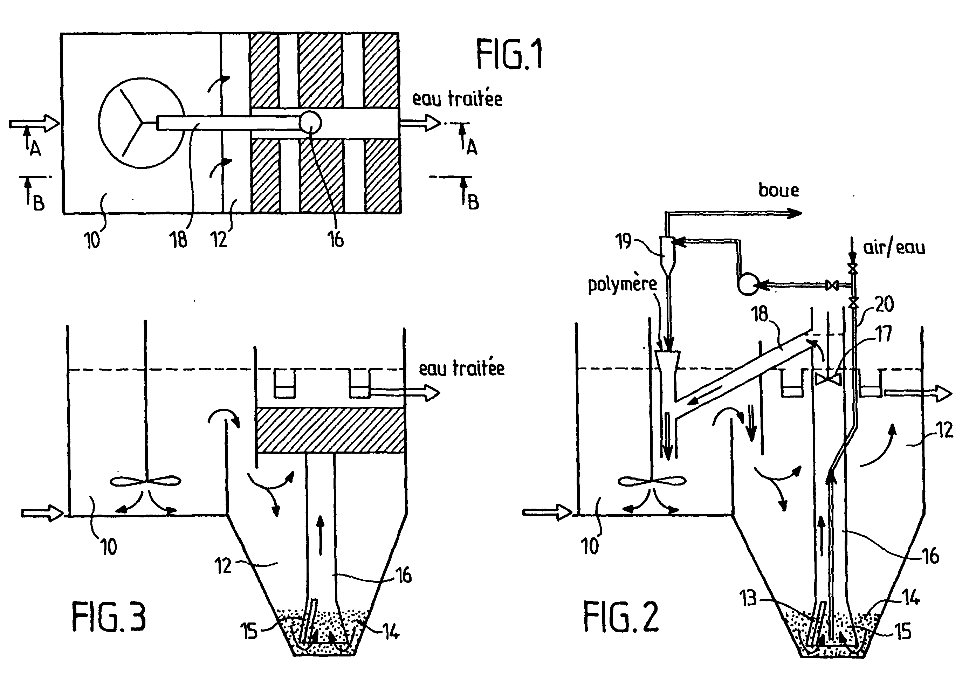

En se référant aux dessins et plus particulièrement aux figures 1 à 3, on y a représenté une installation de traitement de clarification des eaux mettant en oeuvre la technique de floculation lestée. Le fluide brut, préalablement pré-traité ou non, est introduit dans un floculateur (10), muni d'un système mélangeur, tel qu'une hélice, assurant le brassage dudit fluide, du lest ou floc-lesté et du polymère. La suspension est ensuite amenée dans un décanteur (12) qui, dans l'exemple de réalisation illustré sur le dessin, est un décanteur lamellaire bien connu de l'homme de l'art. Selon ce procédé de floculation lestée, le floc-lesté qui s'accumule dans la trémie (14) située au fond du décanteur doit être recyclé dans le floculateur (10), avec ou sans séquence de nettoyage.

On a vu que dans la technique antérieure, l'opération de nettoyage était assurée par un hydrocyclone et les inconvénients de cette solution antérieure ont été soulignés ci-dessus.

Selon la présente invention, on prévoit deux systèmes de recirculation du sable:
- un système à forte énergie, assurant le nettoyage du floc lesté et l'extraction des boues, ainsi que le recyclage du lest nettoyé vers la floculation . Pendant le fonctionnement de ce système à forte énergie, le système à faible énergie est arrêté. Ce système à forte énergie est donc alimenté avec une suspension de floc-lesté qui présente une concentration suffisante de boues, permettant une concentration maximale à l'extraction desdites boues.
- un système à faible énergie assurant le transfert du floc-lesté vers le floculateur tant que le taux de lest dans le floculateur est supérieur à un niveau prédéterminé. La mise en oeuvre de ce système à faible énergie, en augmentant, de façon contrôlée, la quantité de boues dans l'installation, permet, à moindre coût énergétique, d'augmenter, de façon significative, la concentration des boues extraites, tout en assurant une floculation efficace.

Selon l'invention, dans l'exemple de réalisation illustré par les figures 1 à 3, le système à faible énergie comprend un tube de recirculation (16) qui est placé dans la zone centrale de reprise de la suspension de floc-lesté dans le décanteur (12), l'extrémité inférieure du tube (16) étant placée à proximité immédiate du fond de la trémie (14) du décanteur. Dans l'exemple illustré sur la figure 2, cette extrémité inférieure (15) est de forme tronconique, et, de préférence, elle est munie de fentes telles que (13), ou de trous ou orifices calibrés, qui sont positionnés en partant de la base du tube jusqu'à une hauteur dépassant la hauteur maximale possible de la suspension de floc-lesté accumulée dans la trémie (14) lors d'un arrêt de l'installation. Ce système à faible énergie comporte en outre un moyen de pompage de la suspension de floc-lesté au travers du tube (16). Dans l'exemple de réalisation illustré par la figure 2, ce moyen de pompage est réalisé sous la forme d'une hélice (17) disposée selon l'axe du tube (16). Le tube de recirculation (16) débouche, à sa partie supérieure, sur un tube de transfert (18) ramenant la suspension de floc-lesté vers le floculateur (10).

Le système à forte énergie comprend un hydrocyclone (19) et une tuyauterie d'aspiration (20) alimentant cet hydrocyclone, qui prélève la suspension de floc-lesté au fond du décanteur (12), dans la même zone que le tube de recirculation (16). Cet hydrocyclone (19) assure, de façon connue, la séparation du lest d'avec les boues et le recyclage du lest propre vers le floculateur (10). De préférence, ce système à forte énergie est positionné au-dessus du décanteur et sa tuyauterie d'aspiration (20) est disposée à l'intérieur du tube de recirculation (16), de préférence concentriquement à ce dernier, ainsi qu'on l'a représenté sur la figure 2.

La tuyauterie d'aspiration (20) est positionnée verticalement et équipée de dispositifs d'injection d'air ou d'eau, permettant de détasser ou de fluidiser la partie inférieure des moyens de recirculation et assurant une bonne purge de cette même tuyauterie . De par sa disposition, la partie inférieure de ladite tuyauterie d'aspiration (20) est située dans une zone fluidisée du système à faible énergie, ce qui facilite la purge du lest lors des arrêts et évite tout risque de bouchage ou de perte de lest à la surverse de l'hydrocyclone lors des démarrages. Des arrêts et démarrages fréquents dudit hydrocyclone sont donc possibles.

On décrira maintenant le fonctionnement du dispositif décrit ci-dessus.

Lors de ce fonctionnement, le fluide brut, préalablement pré-traité ou non, dans lequel a été injecté un lest ou un floc lesté, ainsi qu'un polymère, est introduit dans un floculateur (10), ou en amont dudit floculateur, lequel est muni d'un système mélangeur, tel qu'une hélice, puis alimente le décanteur (12). Le floc-lesté se dépose dans le fond de la trémie (14) du décanteur. à partir de laquelle il est extrait par au moins l'un des deux systèmes de recirculation décrits ci-dessus.

Lors des re-démarrages de l'installation, la suspension de floc-lesté (de préférence à taux de lest élevé) est reprise par le système à faible énergie ( qui est insensible à la forte concentration de cette suspension), et recirculée par les moyens de pompage (17), au travers du tube (16) et de la conduite (18) ramenant ledit floc-lesté dans le floculateur (10). Ce système à faible énergie fonctionne tant que le taux de lest dans le floculateur (10) est supérieur à un certain niveau, c'est-à-dire lorsqu'un nettoyage du lest n'est pas nécessaire. Ce taux de lest peut être fixé par exemple à 95%. Lorsque le taux de lest tombe en dessous d'une limite prédéterminée, par exemple de l'ordre de 90 %, (c'est-à-dire lorsque le lest devient "sale"), l'hydrocyclone (19) du système à forte énergie est mis en action. On notera que lors de la mise en route de l'hydrocyclone, le système à faible énergie reste en service, le floc-lesté aspiré par l'hydrocyclone est donc dilué, ce qui élimine tout risque de bouchage de l'hydrocyclone ou de perte de lest dans la surverse. Ensuite, après mise en régime de l'hydrocyclone. le système à faible énergie est mis à l'arrêt.

Lors de cette phase de fonctionnement, , la boue est extraite relativement concentrée, à la surverse de l'hydrocyclone, et le lest ressort nettoyé, à la sousverse. Ce lest nettoyé est ensuite ramené dans le floculateur (10), conformément au circuit représenté sur la figure 2.

Le fonctionnement discontinu du système à' forte énergie permet d'obtenir une augmentation notable de la concentration des boues extraites.

Pendant le traitement, les deux systèmes de recirculation respectivement à faible et à forte énergie, décrits ci-dessus, alternent de façon à maintenir le taux de lest à un niveau prédéterminé, compris par exemple entre 90 et 95%. Le taux de lest est mesuré en continu, par exemple par des techniques turbidimétriques, soit manuellement, soit automatiquement. en " direct " ou en " indirect " (la mesure en " indirect " consistant par exemple, à mesurer la turbidité de l'eau à l'entrée de la station et à en déduire, suite à un " apprentissage " préalable, la quantité de boues qui s'accumulera sur le lest) . Dans ce mode de réalisation de l'invention, le contrôle des séquences forte-faible énergie est asservi à la mesure d'un capteur de taux de lest.

Selon une disposition particulière de la présente invention, on assure un contrôle de l'hydrocyclone de manière que toute anomalie de ce fonctionnement soit signalée par un paramètre de contrôle. Si une anomalie est ainsi signalée, par exemple une baisse du débit de recirculation, qui peut être détectée par un débitmètre, le paramètre de contrôle devient critique et il est utilisé pour commander une mise en service du système à faible énergie pour diluer le floc-lesté à la base du tube d'aspiration (20) de l'hydrocyclone, permettant d'obtenir une concentration plus faible et prévenant ainsi tout bouchage et toute perte de lest.

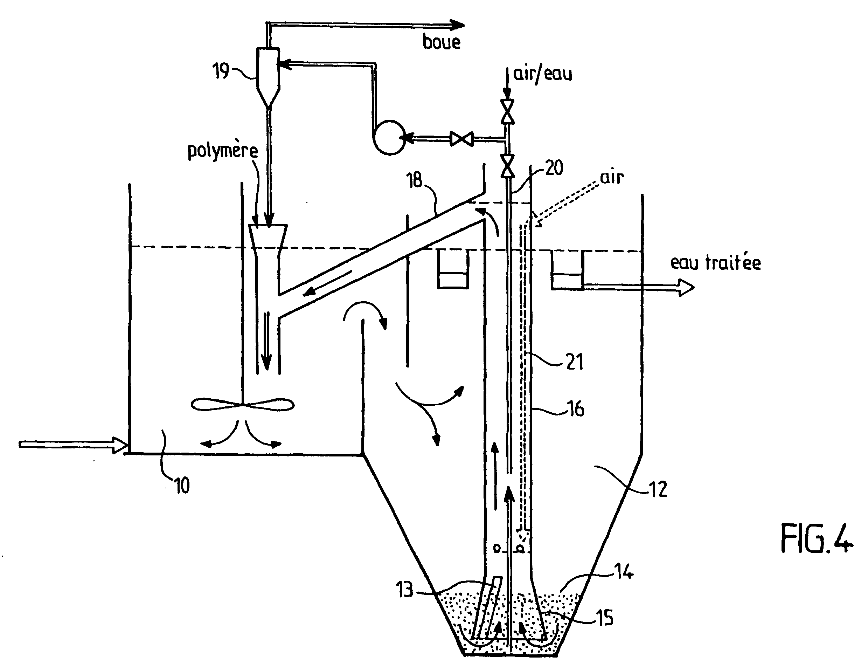

Dans la variante de la figure 4, on retrouve, désignés par les mêmes références, les composants de l'installation décrite ci-dessus en référence aux figures 1 à 3 et plus particulièrement à la figure 2. La différence par rapport à ce premier mode de réalisation réside en ce que les moyens de pompage du système à faible énergie sont réalisés sous la forme d'un système de pompe à air (21) connu généralement des spécialistes sous la dénomination "d'air-lift". Par ailleurs, le fonctionnement de cette variante est identique à celui de l'installation illustrée par les figures précédentes.

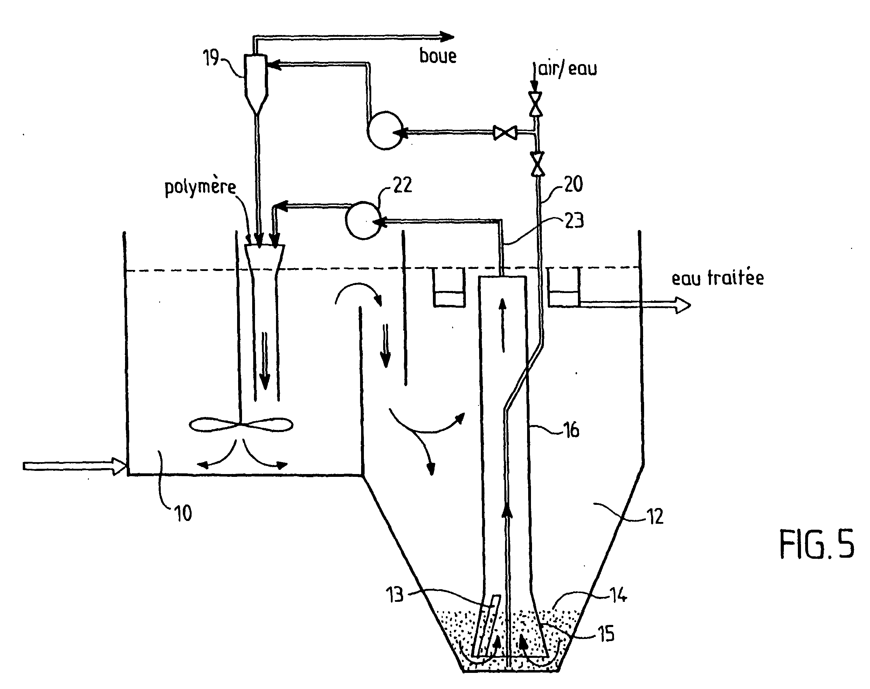

Dans la variante illustrée par la figure 5, on retrouve également les mêmes composants que ceux des installations des figures 1 à 4, mais dans cette seconde variante, les moyens de pompage du système à faible énergie se présentent sous la forme d'une pompe (22) qui aspire la suspension de floc-lesté, au travers du tube (16) par l'intermédiaire d'un tube (23).

Les avantages apportés par la présente invention peuvent être résumés comme suit :
- Une importante économie d'énergie : grâce à l'invention, le système à forte énergie peut être mis hors service tant que le taux de lest dans le floculateur est suffisant. L'arrêt de ce système sera d'autant plus long que l'eau à traiter sera peu chargée et que son débit sera faible. Dans ce type de fonctionnement, l'hydrocyclone ne fonctionnera que 3 à 10% du temps de traitement total. Il en découle une économie d'énergie substantielle. En effet, le système faible énergie consomme de 0,01 à 0,10 Watts par m³ traité par l'installation, dans le cas de l'exemple de réalisation des figures 1 à 3 et de 0,1 à 2 Watts/m³ dans le cas des modes de réalisation des figures 4 et 5, alors que le recyclage de la suspension par le système à forte énergie nécessite 3 à 14 Watts par m³ traité par l'installation.
- Une meilleure gestion des démarrages et des arrêts de l'installation de clarification : la recirculation par le système à faible énergie, permet de remettre en recirculation des suspensions de floc-lesté très concentrées. Il est donc possible, grâce à la présente invention, de mettre en route la circulation de sable sans démarrer l'hydrocyclone qui se boucherait et perdrait du lest, car les concentrations sont trop fortes au cours de cette séquence, et, sans avoir besoin à chaque arrêt de stocker la suspension de floc-lesté dans un réacteur spécifique à forte énergie ou dans le floculateur, dont il faut alors surdimensionner l'hélice pour la remise en suspension ;
- Une réduction des équipements aval de traitement des boues : les boues extraites ont une concentration plus importante du fait du fonctionnement discontinu du système à forte énergie. Dans l'exemple de la clarification des eaux potables, selon l'invention, la teneur en matières sèches des boues extraites reste constamment supérieure à 2 grammes par litre alors qu'elle est de l'ordre de 0.1 à 2 grammes par litre pour les procédés de floculation lestés antérieurement utilisés. On peut ainsi diviser par un facteur de 1 à 20 le débit des boues à traiter et, par conséquent, la perte en eau de l'installation.
- Une simplification de l'exploitation, due au fait que le système à forte énergie est positionné au-dessus du décanteur et que sa tuyauterie d'aspiration (20) est verticale, sa partie inférieure étant située dans une zone fluidisée du système à faible énergie, ce qui permet d'une part de minimiser les risques de bouchage et de perte de lest, et, donc, de faciliter l'exploitation de ce procédé de traitement par clarification ; d'autre part, le positionnement de tous les équipements au-dessus du plan d'eau, permet de supprimer la galerie technique sous le radier du décanteur, galerie qui était indispensable dans les installations selon l'état antérieur de la technique .

Il demeure bien entendu que la présente invention n'est pas limitée aux modes de mise en oeuvre et aux exemples de réalisation décrits et/ou mentionnés ci-dessus, mais qu'elle en englobe toutes les variantes.

## Revendications

1. Procédé de clarification des liquides et suspensions en particulier des eaux résiduaires urbaines ou industrielles, potables, de procédés ou résiduaires, mettant en oeuvre la technique de floculation lestée avec une étape d'injection dans le liquide à clarifier, prétraité ou non d'une masse de contact ou lest, constituée d'un matériau granulaire, tel que notamment du sable et d'un polymère, suivie d'une étape de floculation qui amène la formation d'un floc lesté et d'une étape de décantation accélérée, ledit lest étant recirculé dans l'étape de floculation, soit tel quel, soit après nettoyage, selon un premier régime de recirculation qui assure l'extraction du lest contenu dans le floc-lesté et donc, notamment la séparation du sable d'avec les boues, l'élimination du floc sous forme de boues et le recyclage du lest nettoyé vers la floculation, **caractérisé en ce qu'**il comporte un second régime de recirculation à énergie plus faible que le premier régime assurant l'extraction du lest contenu dans le floc lesté, ce second régime assurant le transfert du floc lesté vers l'étape de floculation tant que le taux de lest dans le floculateur est supérieur à un niveau prédéterminé, ce second régime restant en service lors de la mise en action du premier régime, mais étant ensuite arrêté pendant le fonctionnement dudit premier régime, les deux systèmes étant mis en oeuvre de façon alternée de manière à maintenir le taux de lest à un niveau prédéterminé.

2. Procédé selon la revendication 1, **caractérisé en ce qu'**il comporte en outre une étape de mesure en continu du taux de lest.

3. Procédé selon la revendication 2, **caractérisé en ce que** ladite mesure du taux de lest est effectuée par turbidimétrie, directement ou indirectement.

4. Procédé selon la revendication 1 **caractérisé en ce que** ladite mesure du taux de lest est effectuée indirectement par mesure de la turbidité du liquide ou de la suspension à clarifier, à l'entrée de la station de traitement et **en ce que** l'on déduit de cette mesure la quantité de boues s'accumulant sur le lest.

5. Procédé selon la revendication 1 **caractérisé en ce que** le second régime est systématiquement utilisé pour tout démarrage et redémarrage de l'installation afin de remettre en circulation le lest ou le floc lesté.

6. Installation pour la mise en oeuvre du procédé selon l'une quelconque des revendications précédentes qui comporte un floculateur (10) dans lequel parviennent les liquides ou suspensions à clarifier, le lest ou floc lesté et le polymère, un décanteur (12), des moyens assurant la reprise des flocs lestés constitués d'un tube de recirculation (16) placé dans la zone centrale de reprise des flocs-lestés du décanteur (12), l'une des extrémités (15) dudit tube étant positionnée à proximité immédiate du fond du décanteur, et d'un moyen de pompage (17 ; 21 ; 22) du floc-lesté au travers dudit tube (16) pour le délivrer au floculateur (10) ; et des moyens assurant la séparation du lest d'avec les boues ainsi que le recyclage du lest vers le floculateur et qui comprennent un hydrocyclone (19) et une tuyauterie d'aspiration (20) alimentant ledit hydrocyclone,
**caractérisé en ce que** :
la tuyauterie d'aspiration (20) est disposée à l'intérieur du tube de recirculation (16) et son extrémité inférieure, par laquelle est prélevée le floc lesté au fond du décanteur, débouche dans la même zone que le tube de recirculation (16).

7. Installation selon la revendication 6 **caractérisée en ce que** le tube de recirculation (16) débouche, en partie supérieure, sur un tube de transfert (18) ramenant le floc-lesté vers le floculateur (10).

8. Installation selon l'une des revendications 6 ou 7 **caractérisée en ce que** l'extrémité inférieure du tube de recirculation (16) est de forme tronconique.

9. Installation selon l'une quelconque des revendications 6 à 8 **caractérisée en ce que** la base du tube de recirculation (16) est pourvue d'une ou de plusieurs fentes (13), trous ou orifices calibrés qui sont positionnés de la base dudit tube jusqu'à une hauteur dépassant la hauteur maximale possible de le floc-lesté accumulée lors d'un arrêt.

10. Installation selon la revendication 6 **caractérisée en ce que** les moyens de pompage du floc-lesté sont constitués d'une hélice (17).

11. Installation selon la revendication 6 **caractérisée en ce que** les moyens de pompage du floc-lesté sont constitués d'un système de pompe à air (21).

12. Installation selon la revendication 6 **caractérisée en ce que** les moyens de pompage du floc-lesté sont constitués d'une pompe (22).

13. Installation selon la revendication 6 **caractérisée en ce que** les moyens de reprise du floc lesté sont positionnés au dessus du décanteur.

14. Installation selon l'une des revendications 6 ou 13 **caractérisée en ce que** la tuyauterie d'aspiration (20) est verticale.

15. Installation selon la revendication 14 **caractérisée en ce que** la tuyauterie d'aspiration (20) est disposée concentriquement au tube de recirculation (16).

16. Installation selon l'une des revendications 14 ou 15 **caractérisée en ce que** la tuyauterie d'aspiration (20) est munie de moyens d'injection d'air ou d'eau afin de détasser ou de fluidiser la partie inférieure des moyens de recirculation.

17. Installation selon l'une quelconque des revendications 6 à 16 **caractérisée en ce qu'**elle comporte en outre un capteur mesurant le taux de lest, le contrôle des séquences de fonctionnement des moyens de reprise du floc lesté et des moyens de séparation du lest d'avec les boues, étant asservi à la mesure dudit capteur.

## Claims

1. Method for clarifying liquids and suspensions, particularly urban or industrial effluents, drinking, process or waste water, using the ballast flocculation procedure with a stage of injecting into the pretreated or unpretreated liquid to be clarified, a contact mass or ballast constituted by a granular material, such as in particular sand and a polymer, followed by a flocculation stage bringing about the formation of a ballast-floc and an accelerated settling stage, said ballast being recycled in the flocculation stage, either as it is, or after cleaning, in accordance with a first recycling operating mode ensuring the extraction of the ballast contained in the ballast-floc and therefore, particularly the separation of the sand from the sludge, the elimination of the floc in sludge form and the recycling of the cleaned ballast to flocculation, **characterized in that** it involves a second recycling operating mode at a lower energy level than the first operating mode ensuring the extraction of the ballast contained in the ballast-floc, said second operating mode ensuring the transfer of the ballast-floc to the flocculation stage when the ballast proportion in the flocculator is above a predetermined level, said second operating mode remaining in service during the putting into operation of the first operating mode, but is then stopped during the operation of said first operating mode, the two systems being operated alternately so as to maintain the ballast proportion at a predetermined level.

2. Method according to claim 1, **characterized in that** it also involves a stage of continuously measuring the ballast proportion.

3. Method according to claim 2, **characterized in that** said ballast proportion measurement takes place directly or indirectly by turbidimetry.

4. Method according to claim 1, **characterized in that** said ballast proportion measurement is performed indirectly by measuring the turbidity of the liquid or suspension to be clarified on entering the treatment station and **in that** from said measurement is deduced the sludge quantity accumulated on the ballast.

5. Method according to claim 1, **characterized in that** the second operating mode is systematically used for any starting and restarting of the installation in order to recycle the ballast or ballast-floc.

6. Installation for performing the method according to any one of the preceding claims incorporating a flocculator (10) into which pass the liquids or suspension to be clarified, the ballast or ballast-floc and the polymer, as well as a settling tank (12), means ensuring the taking up of the ballast-floc constituted by a recycling tube (16) placed in the central take-up zone of the ballast-floc of the settling tank (12), one of the ends (15) of said tube being positioned in the immediate vicinity of the bottom of the settling tank, and a means (17, 21, 22) for pumping the ballast-floc through said tube (16) in order to supply it to the flocculator (10) and means ensuring the separation of the ballast from the sludge and the recycling of the ballast to the flocculator and which comprise a hydrocyclone (19) and a suction pipe (20) supplying said hydrocyclone, **characterized in that** the suction pipe (20) is located in the interior of the recycling tube (16) and its lower end, by which is sampled the ballast-floc at the bottom of the settling tank, issues into the same zone as the recycling tube (16).

7. Installation according to claim 6, **characterized in that** the upper part of the recycling tube (16) issues onto a transfer tube (18) bringing the ballast-floc to the flocculator (10).

8. Installation according to either of the claims 6 or 7, **characterized in that** the lower end of the recycling tube (16) is truncated cone-shaped.

9. Installation according to any one of the claims 6 to 8, **characterized in that** the base of the recycling tube (16) is provided with one or more gauged orifices, holes or slots (13) located from the base of said tube up to a height exceeding the maximum possible height of the ballast-floc accumulated during a stoppage.

10. Installation according to claim 6, **characterized in that** the ballast-floc pumping means are constituted by a helix (17).

11. Installation according to claim 6, **characterized in that** the ballast-floc pumping means are constituted by an air pump system (21).

12. Installation according to claim 6, **characterized in that** the ballast-floc pumping means are constituted by a pump (22).

13. Installation according to claim 6, **characterized in that** the system operating according to said second operating mode is positioned above the settling tank.

14. Installation according to one of the claims 6 or 13, **characterized in that** the suction pipe (20) is vertical.

15. Installation according to claim 14, **characterized in that** the suction pipe (20) is positioned concentrically to the recycling tube (16).

16. Installation according to one of the claims 14 or 15, **characterized in that** the suction pipe (20) is provided with air or water injection means in order to decompress or fluidize the lower part of the recycling means.

17. Installation according to any one of the claims 6 to 16, **characterized in that** it also incorporates a sensor measuring the ballast proportion, the checking of the sequences according to the first and second operating modes being dependent on the measurement of said sensor.

## Patentansprüche

1. Verfahren zum Klären von Flüssigkeiten und Suspensionen, insbesondere von kommunalen und industriellen Abwässern, Trinkwasser, aus Verfahren oder Abfällen, unter Anwendung der Technik der Ballast-Ausflockung mit einem Schritt des Einspritzens einer aus einem körnigen Material wie Sand und aus einem Polymer gebildeten Kontakt- oder Ballastmasse in die zu klärende, vorbehandelte oder unvorbehandelte Flüssigkeit, gefolgt von einem Schritt der Ausflockung, der zu einer Bildung von Ballastflocken führt, und von einem Schritt der beschleunigten Absetzung, wobei besagter Ballast im Ausflockungsschritt wiederverwertet wird, sei es so wie er ist, sei es nach einer Reinigung, nach einem ersten Modus der Wiederverwertung, der die Extraktion des in den Ballastflocken enthaltenen Ballasts, insbesondere die Trennung des Sandes von den Schlämmen, und somit die Abführung der Flocken in Form von Schlämmen und die Rückführung des Ballasts zur Ausflockung sicherstellt, **dadurch gekennzeichnet, dass** es einen zweiten Modus der Rückführung mit geringerem Energieeinsatz als beim ersten Modus umfasst, welcher die Extraktion des in den Ballastflocken enthaltenen Ballasts sicherstellt, wobei dieser zweite Modus die Überleitung der Ballastflocken zum Schritt der Ausflockung bewirkt, solange der Anteil des Ballasts im Ausflocker höher als ein vorbestimmter Wert ist, wobei dieser zweite Modus beim Aktivieren des ersten Modus in Betrieb bleibt, aber dann während des Wirkens des ersten Modus abgeschaltet wird, wobei die beiden Modi alternierend so angewendet werden, dass der Ballastanteil auf einem vorbestimmten Wert gehalten wird.

2. Verfahren nach Anspruch 1, **dadurch gekennzeichnet, dass** es außerdem einen Schritt zum kontinuierlichen Messen des Ballastanteils umfasst.

3. Verfahren nach Anspruch 2, **dadurch gekennzeichnet, dass** die besagte Messung des Ballastanteils direkt oder indirekt durch Trübungsmessung durchgeführt wird.

4. Verfahren nach Anspruch 1, **dadurch gekennzeichnet, dass** die besagte Messung des Ballastanteils indirekt durch Messen der Trübung der zu klärenden Flüssigkeit oder Suspension im Zuflussbereich der Behandlungsanlage ausgeführt wird und dass man aus dieser Messung die Menge der sich auf dem Ballast ansammelnden Schlämme ableitet.

5. Verfahren nach Anspruch 1, **dadurch gekennzeichnet, dass** der zweite Modus systematisch für jede Inbetriebnahme und Wiederinbetriebnahme der Anlage angewendet wird, um den Ballast oder die Ballastflocken in Zirkulation zu versetzen.

6. Anlage zum Durchführen des Verfahrens nach einem der vorstehenden Ansprüche, die einen Ausflocker (10) umfasst, in den die zu klärenden Flüssigkeiten oder Suspensionen, der Ballast oder die ballastbelasteten Flocken und das Polymer gelangen, ein Absetzbecken (12), Mittel zum Sicherstellen der Wiederaufnahme der Ballastflocken, die aus einem in dem zentralen Bereich des Absetzbeckens (12) angeordneten Rückführrohr (16) gebildet sind, wobei das eine Ende (15) des besagten Rohres in unmittelbarer Nähe zum Boden des Absetzbeckens liegt, und ferner von einem Mittel zum Pumpen (17; 21; 22) der Ballastflocken durch besagtes Rohr (16), um diese zum Ausflocker (10) zu transportieren; und Mittel zum Sicherstellen der Trennung des Ballasts von den Schlämmen so wie der Rückführung des Ballasts zum Ausflocker, und die einen Hydrozyklon (19) und ein besagten Hydrozyklon speisendes Ansaugrohrsystem (20) umfassen,
**dadurch gekennzeichnet, dass** :
das Ansaugrohrsystem (20) im Inneren des Rückführrohres (16) angeordnet ist und sein unteres Ende, durch welches die Ballastflocken vom Boden des Absetzbeckens abgezogen werden, in demselben Bereich mündet wie besagtes Rückführrohr (16).

7. Anlage nach Anspruch 6, **dadurch gekennzeichnet, dass** das Rückführrohr (16) im oberen Teil in ein Transportrohr (18) mündet, das die Ballastflocken zum Ausflocker (10) zurückbringt.

8. Anlage nach einem der Ansprüche 6 oder 7, **dadurch gekennzeichnet, dass** das untere Ende des Rückführrohres (16) von kegelstumpfartiger Form ist.

9. Anlage nach einem der Ansprüche 6 bis 8, **dadurch gekennzeichnet, dass** die Basis des Rückführrohres (16) mit einem oder mehreren kalibrierten Schlitzen (13), Löchern oder Öffnungen versehen ist, die ausgehend von der Basis des besagten Rohres bis zu einer Höhe angeordnet sind, die größer als die maximal mögliche Höhe der bei einem Anlagenstopp angehäuften Ballastflocken ist.

10. Anlage nach Anspruch 6, **dadurch gekennzeichnet, dass** die Mittel zum Pumpen der Ballastflocken von einem Propeller (17) gebildet sind.

11. Anlage nach Anspruch 6, **dadurch gekennzeichnet, dass** die Mittel zum Pumpen der Ballastflocken von einem pneumatischen Pumpsystem (21) gebildet sind.

12. Anlage nach Anspruch 6, **dadurch gekennzeichnet, dass** die Mittel zum Pumpen der Ballastflocken von einer Pumpe (22) gebildet sind.

13. Anlage nach Anspruch 6, **dadurch gekennzeichnet, dass** die Mittel zum Aufnehmen der Ballastflocken über dem Absetzbecken angeordnet sind.

14. Anlage nach einem der Ansprüche 6 oder 13, **dadurch gekennzeichnet, dass** das Ansaugrohrsystem (20) vertikal verläuft.

15. Anlage nach Anspruch 14, **dadurch gekennzeichnet, dass** das Ansaugrohrsystem (20) konzentrisch zu dem Rückführrohr (16) angeordnet ist.

16. Anlage nach einem der Ansprüche 14 oder 15, **dadurch gekennzeichnet, dass** das Ansaugrohrsystem (20) mit Mitteln zum Einspritzen von Luft oder Wasser versehen ist, um den unteren Abschnitt der Rückführmittel aufzulockern oder fließfähig zu machen.

17. Anlage nach einem der Ansprüche 6 bis 16, **dadurch gekennzeichnet, dass** sie ferner einen Sensor zum Messen des Ballastanteils umfasst, wobei die Steuerung der Arbeitsfolgen im ersten und im zweiten Modus nach Maßgabe des besagten Sensors abläuft.
